# EUROPÄISCHE PATENTSCHRIFT

(11) **EP 0 901 519 B1**
(45) Veröffentlichungstag und Bekanntmachung des Hinweises auf die Patenterteilung: **03.09.2003**
(21) Anmeldenummer: 96913668.8
(22) Anmeldetag: 21.05.1996
(51) Int. Cl.: C12G 3/04

(54) **GETRÄNK**
DRINK
BOISSON

(43) Veröffentlichungstag der Anmeldung: 17.03.1999
(73) Patentinhaber: Lars AG, 8008 Zürich (CH)
(72) Erfinder: BOETZKES, Klaus, Comù de Ordino (AD)
(74) Vertreter: Lusuardi, Werther Giovanni, Dr.
(86) Internationale Anmeldenummer: IB9600489
(87) Internationale Veröffentlichungsnummer: WO97044438

(56) Entgegenhaltungen:
- GB-A- 1 037 885
- GB-A- 1 386 075
- US-A- 4 885 184
- THE AUSTRALIAN WOMEN'S WEEKLY: "Cocktail Guide" 1990 , AUSTRALIAN CONSOLIDATED PRESS , SYDNEY, AUSTRALIA XP002026206 siehe Seite 45

## Beschreibung

Die Erfindung betrifft ein Getränk nach dem Oberbegriff des Anspruchs 1 , welches vorzugsweise in Dosen, Fässern oder Flaschen abgefüllt sein kann und ein Verfahren zur Herstellung des Getränkes nach dem Oberbegriff des Anspruchs 7.

Es ist zwar bekannt, in Gaststätten Bier und Sekt unmittelbar vor dem Genuss durch den Gastwirt oder den Konsumenten selbst zu vermischen. Ein Beispiel dafür findet sich in der Zeitschrift The Australian Womens's Weekly "Cocktail Guide", 1990, Sidney, Australien auf Seite 45, wo ein Cocktail aus Bier und Champagner vorgeschlagen wird. Die Nachteile dieses Vorgehens bestehen aber darin, dass die offene Mischoperation unvermeidlich zu einem erheblichen Verlust der in beiden Getränken enthaltenen Kohlensäure führt.
Ein weiterer Nachteil des offenen Vermischens besteht im Problem der Konservierung allfälliger Restemengen von unvermischten offenen Getränken.

Aus der GB-A-1 386 075 ist weiter ein Mischgetränk aus Bier, Orangenwein und Naringin bekannt. In dieser Veröffentlichung finden sich jedoch keine Hinweise auf nach Vermischung der Komponenten durchgeführte Verfahrensschritte, insbesondere fehlt ein Hinweis auf eine Abfüllung in Druckbehälter und auf Einhaltung eines bestimmten Kohlesäuregehaltes.

Schliesslich ist aus der GB-A-1 037 885 ein Mischgetränk aus Bier und Tomatensaft bekannt, welches in einem geeigneten Behälter abgefüllt ist. In diesem Dokument fehlt ein Hinweis auf die Zugabe von Wein zu diesem Mischgetränk.

Hier will die Erfindung Abhilfe schaffen. Der Erfindung liegt das Problem zugrunde, ein bekömmliche Getränk zu schaffen, das sich in normalen Verbrauchsmengen und in geschlossener Verpackung anbieten lässt.

Zur Lösung dieses Problems ist das eingangs genannte Getränk durch die Merkmale des kennzeichnenden Teils des unabhängigen Anspruchs 1 und das eingangs genannte Verfahren durch die Merkmale des kennzeichnenden Teils des Anspruchs 7 weitergebildet.

Das erfindungsgemässe Getränk bringt verschiedene Vorteile mit sich. Die Vermischung von Bier und Sekt erst unmittelbar vor dem Genuss, führt unvermeidlich zu einem erheblichen Verlust der in beiden Getränken enthaltenen Kohlensäure. Beim erfindungsgemässen Getränk lässt sich hingegen in weiten Grenzen der Kohlensäuregehalt beliebig einstellen.
Ein weiterer erfindungsgemässer Vorteil ist darin zu sehen, dass es möglich ist, mittels der Erfindung verhältnismässig kleine Portionen abzufüllen, wodurch sich erreichen lässt, dass das Problem der Konservierung der Reste entfällt. Es ist klar, dass bei gleichen Gefässgrössen die in der bisherigen Weise zu verbrauchende kleinste Menge doppelt so gross ist, wie bei der Erfindung. Andererseits können die Gefäss- bzw. Flaschengrössen aus wirtschaftlichen Gründen auch nicht beliebig verkleinert werden.

Eine bevorzugte Weiterbildung besteht darin, dass das Getränk insgesamt 5 bis 12 Gew.% , vorzugsweise 6 - 10 Gew.% Äthylalkohol enthält, einen Kohlensäuregehalt von insgesamt 5 bis 10 g/l, vorzugsweise von 6 bis 9 g/l aufweist und insgesamt einen Zuckergehalt von 4 bis 8 Gew.%, vorzugsweise von 5 bis 7 Gew.% aufweist.

Komponente A enthält zweckmässigerweise ein Gemisch von Gerstenoder Weizenmalz, Wasser, Hopfen und Hefe und weist einen Alkoholgehalt von 1,2 - 5,8 Gew.%, vorzugsweise von 2,0 - 4,5 Gew.% auf sowie einen Kohlensäuregehalt von 4,5 - 9 g/l, vorzugsweise von 5 - 8 g/l auf.

Komponente B enthält zweckmässigerweise mindestens 8,5 Gew.%, vorzugsweise 10,0 Gew.% Äthylalkohol, Zucker in einer Menge von höchstens 40 g/l, sowie einen Kohlensäuregehalt von 5 bis 9 g/l, vorzugsweise von 6 bis 8 g/l.

Die Komponente A kann auch Bier enthalten, und die Komponenten B kann Grundwein, Schaumwein oder Sekt enthalten.

Die Komponenten A und B werden zweckmässigerweise in einem Verhältnis A/B vermischt werden, welches zwischen 0,25 - 1,50, vorzugsweise zwischen 0,9 - 1,1 liegt.

Das Getränk kann zusätzlich zu den bereits genannten Substanzen auch noch Melatonin (vorzugsweise in einer Menge von 0,05 - 2,00 Gew.-%), Vitamin C (vorzugsweise in einer Menge von 0,05 - 2,00 Gew.-%) und/oder organische Germaniumverbindungen (vorzugsweise in einer Menge von 0,01 - 1,00 Gew.-%) enthalten.

Die Erfindung bevorzugt ein Mischungsverhältnis von etwa 1:1 zwischen den beiden Komponenten des Getränkes. Es ist aber auch ohne weiteres möglich, das Mischungsverhältnis nach der einen oder nach der anderen Seite zu verschieben.

Bezüglich der vermischbaren Biersorten und Sektsorten sind verschiedene Varianten denkbar. Die gegenseitige Zuordnung wird dabei in der Regel nach geschmacklichen Überlegungen zu erfolgen haben.

Bei der Erfindung kann auf die besondere Zugabe von Kohlensäure ganz verzichtet werden und es ist möglich, sich auf die Kohlensäure zu beschränken, die in den Ausgangsstoffen ohnehin vorhanden ist bzw. diesen regelmässig zugemischt wird. Es ist auch möglich, das Gemisch nach der Vermischung noch zusätzlich mit Kohlensäure zu versetzen, wobei die an sich bekannten Methoden zur Einleitung der Kohlensäure in die Getränke Anwendung finden können.

Der Zusatz weiterer Stoffe zu dem erfindungsgemässen Getränk, wie zum Beispiel von Zucker oder Alkohol hängt ebenfalls von geschmacklichen Überlegungen ab.

Bei einer besonderen Ausführungsform der Erfindung umfasst das Getränk zwei miteinander vermischte Komponenten A und B umfasst welche in einem unter Druck stehenden Behälter abgefüllt sind. Dabei ist
A) Komponente A eine Anstellwürze;
B) Komponente B Wein; wobei
C) das Getränk insgesamt 3 bis 16 Gew.% Äthylalkohol enthält;
D) das Getränk insgesamt einen Kohlensäuregehalt von 3 bis 15 g/l aufweist; und
E) das Getränk insgesamt einen Zuckergehalt von 2 bis 15 Gew.% aufweist.

Die Erfindung und Weiterbildungen der Erfindung wird im folgenden anhand eines Ausführungsbeispiels noch näher erläutert.

### BEISPIEL (Herstellung von SEKTBIER)

Zur Herstellung von Sektbier werden beispielhaft zwei Verfahren angegeben:

### A) Durch Mischung zweier fertiger Komponenten, nämlich Sekt und Bier (ggf. Weizenbier, Pils, Alt, Export, Bockbier usw.)

Hierbei wird nach kurzer Kontaktzeit (etwa 2 - 3 Std.) Eiweiß ausgefällt. Diese Trübung wird durch Zugabe (30 - 150 g/hl) eines Koaguliermittels zur Kieselgurdosierung und durch Ausfilterung beseitigt. Das fertige Sektbier kann in Flaschen, Dosen, Fässer usw. abgefüllt werden.

### B) Herstellung von Sektbier durch Vergärung in situ

Für einen Hektoliter Bier werden ca. 17 kg Malz sowie 90 - 92 1 Wasser benötigt. Hopfen und Hefe lassen sich nicht festlegen, da Art und Aufbereitung differieren. Durch den Maischprozess werden die Stärketeile zu Zucker umgewandelt. Die so gewonnene verzuckerte Flüssigkeit nennt man Würze. Diese Würze wird nach Abkühlung mit etwa 0,5 l dickbreiiger Hefe angestellt (Anstellwürze). Bei der Sektbierstellung handelt es sich um eine Umgärung oder Zweitgärung des Weines. Die natürliche Kohlensäure, die dabei entsteht, bleibt erhalten und wird zum entscheidenden Produktmerkmal des "schäumenden" Weines. Ein guter Sektgrundwein sollte bestimmte Voraussetzungen erfüllen, z.B. beim Alkoholgehalt (80 - 85 g/l) oder bei der Gesamtsäure (7 - 10 g/l). Der Gerbstoffgehalt sollte bei Weisswein niedrig liegen, ebenso der pH-Wert.

Der Sektgrundwein wird zur Anstellwürze zugegeben und ggf. mit einer Weinhefe versetzt. Dieses Anstellgemisch (wobei variable Mischungen von 20 zu 80 und umgekehrt möglich sind) kann auf Flaschen gefüllt (Flaschengärung) oder in Gärtanks vergoren werden und dann filtriert oder unfiltriert abgefüllt werden. Die Gärzeit richtet sich nach dem gewünschten Vergärungsgrad und ist wesentlich abhängig von der Wahl der Hefen (ober- oder untergärig), der Temperaturführung und der Gärgefässe (offene oder geschlossene). Nach der Gärung soll eine Lagerung zur Geschmacksreifung von ausreichender Zeit (je nach Temperatur) bis zu sechs Monaten vorgenommen werden.

Bei einer Mischung von 50:50 Anstellwürze und Wein würde sich eine Zusammensetzung des Sektbiers aus folgenden Anteilen ergeben: ca. 3 % Extrakt, 6 - 8 % Alkohol, 0,5 - 0,8 % Kohlensäure (6 - 9 g/l) und 88 - 90 % Wasser. Die Zusammensetzung des Extraktes umfasst 65 - 75 % Kohlenhydrate, ca. 4 % Eiweiß, ca. 5 % Glycerin, ca. 7 % Mineralstoffe, 4 % Bitter-, Gerb- und Farb-Stoffe, ca. 2 % organische Säuren, sowie geringe Mengen an Vitaminen.

Bei der Herstellung von Sektbier sollte darauf geachtet werden, dass zur Reinigung und Desinfektion der Filteranlagen auf chlorhaltige Reinigungsmittel verzichtet wird (zur Vermeidung von Chloroform).

## Patentansprüche

1. Getränk, **dadurch gekennzeichnet, dass** es durch eine in situ erfolgende Vergärung eines Anstellgemisches von Anstellwürze mit einem Wein erhalten wird.

2. Getränk nach Anspruch 1, **dadurch gekennzeichnet, dass** es durch Zweitgärung mit Kohlensäure angereichert ist.

3. Getränk nach Anspruch 1 oder 2, **dadurch gekennzeichnet, dass** die Anstellwürze ein Gemisch aus einer verzuckerten Flüssigkeit mit einer Hefe ist.

4. Getränk nach einem der Ansprüche 1 bis 3, **dadurch gekennzeichnet, dass** das Verhältnis zwischen Anstellwürze und Wein 50:50 beträgt.

5. Getränk nach einem der Ansprüche 1 bis 4, **dadurch gekennzeichnet, dass** es 6 - 8 % Alkohol enthält.

6. Getränk nach einem der Ansprüche 1 bis 5, **dadurch gekennzeichnet, dass** es 0,5 - 0,8 % Kohlensäure enthält.

7. Verfahren zur Herstellung eines Getränkes, **dadurch gekennzeichnet, dass** ein Gemisch von Anstellwürze mit einem Wein in situ vergärt wird.

8. Verfahren nach Anspruch 7, **dadurch gekennzeichnet, dass** bei der Vergärung eine Weinhefe zugegeben wird.

## Claims

1. A beverage, **characterised in that** it is obtained by the in-situ fermentation of a starting mixture consisting of a starting wort and a wine.

2. The beverage as claimed in claim 1, **characterised in that** it is enriched with carbon dioxide during a second fermentation process.

3. The beverage as claimed in claim 1 or 2, **characterised in that** the starting wort is a mixture of a saccharified liquid and a yeast.

4. The beverage as claimed in any of the claims 1 to 3, **characterised in that** the ratio between starting wort and wine is 50 to 50.

5. The beverage as claimed in any of the claims 1 to 4, **characterised in that** it contains between 6 and 8 percent of alcohol.

6. The beverage as claimed in any of the claims 1 to 5, **characterised in that** it contains between 0.5 and 0.8 percent of carbon dioxide.

7. A method of producing a beverage, **characterized in that** a mixture of starting wort and wine is fermented in situ.

8. The method as claimed in claim 7, **characterised in that** a wine yeast is added during fermentation.

## Revendications

1. Boisson **caractérisée en ce qu'**elle est obtenue par fermentation in situ d'un mélange fermenté de moût fermenté et de vin.

2. Boisson selon la revendication 1, **caractérisée en ce qu'**elle est enrichie en acide carbonique par une fermentation secondaire.

3. Boisson selon la revendication 1 ou 2, **caractérisée en ce que** le moût fermenté est un mélange d'un liquide sucré et d'une levure.

4. Boisson selon l'une des revendications 1 à 3, **caractérisée en ce que** le rapport entre le moût fermenté et le vin est de 50:50.

5. Boisson selon l'une des revendications 1 à 4, **caractérisée en ce qu'**elle contient de 6 à 8 % d'alcool.

6. Boisson selon l'une des revendications 1 à 5, **caractérisée en ce qu'**elle contient de 0,5 à 0,8 % d'acide carbonique.

7. Procédé pour la préparation d'une boisson **caractérisé en ce que** l'on fermente in situ un mélange de moût fermenté et de vin.

8. Procédé selon la revendication 7, **caractérisé en ce que** lors de la fermentation, on ajoute une levure de vin.
